# FASCICULE DE BREVET EUROPEEN

(11) **EP 3 479 107 B1**
(45) Date de publication et mention de la délivrance du brevet: **17.06.2020**
(21) Numéro de dépôt: 17734090.8
(22) Date de dépôt: 29.06.2017
(51) Int. Cl.: G01N 25/72

(54) **PROCÉDÉ D'INSPECTION D'UNE SURFACE MÉTALLIQUE ET DISPOSITIF ASSOCIÉ**
VERFAHREN ZUR INSPEKTION EINER METALLOBERFLÄCHE UND ZUGEHÖRIGE VORRICHTUNG
METHOD FOR INSPECTING A METAL SURFACE AND ASSOCIATED DEVICE

(30) Priorité: 30.06.2016 FR 1656226
(43) Date de publication de la demande: 08.05.2019
(73) Titulaire: FRAMATOME, 92400 Courbevoie (FR)
(72) Inventeur: CAULIER, Yannick, 04100 Manosque (FR)
(74) Mandataire: Lavoix
(86) Numéro de dépôt international: PCT/EP2017/066204
(87) Numéro de publication internationale: WO 2018/002263

(56) Documents cités:
- EP-A1- 0 253 734
- WO-A1-2009/055370
- DE-A1-102013 110 667
- US-A- 4 772 789
- US-A1- 2003 165 178
- SEMEROK A ET AL: "Laser active thermography for non-destructive testing", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9065, 28 novembre 2013 (2013-11-28), pages 90650A-90650A, XP060032352, DOI: 10.1117/12.2053120 ISBN: 978-1-62841-730-2
- BANDYOPADHYAY P K: "Multispectral antireflection coating simultaneously effective in visible, diode laser, Nd-YAG and eye safe laser wavelength", JOURNAL OF PHYSICS: CONFERENCE SERIES, INSTITUTE OF PHYSICS PUBLISHING, BRISTOL, GB, vol. 114, no. 1, 1 mai 2008 (2008-05-01), page 12004, XP020139968, ISSN: 1742-6596
- S Elhadj ET AL: "LLNL-JRNL-584155 Combined infrared thermal imaging and laser heating for the study of materials thermophysical and processing properties at high temperatures Critical Reviews in Solid State and Materials Sciences", , 24 septembre 2012 (2012-09-24), XP055354412, Extrait de l'Internet: URL:https://e-reports-ext.llnl.gov/pdf/665 093.pdf [extrait le 2017-03-14]

## Description

La présente invention concerne un procédé d'inspection d'une surface métallique d'une pièce.

Le document FR 3020678 décrit un procédé d'inspection photothermique d'une pièce.

L'article "Laser active thermography for non-destructive testing" de A. Semerok et al, publié dans les Proceedings of SPIE (ISSN 0277-786X), vol. 9065 (2013), pages 90650A-1 - 90650A-20, décrit un procédé et un dispositif d'inspection d'un objet (ayant une surface métallique) avec une source laser (Nd:YAG) ayant une longueur d'onde de 1064nm avec une puissance jusqu'à 200W, une optique pour illuminer et échauffer la surface de l'objet avec le faisceau laser, et une caméra IR pour acquérir une image IR émise par la surface.

Selon ce procédé, la surface est balayée par deux dispositifs de balayage similaires comprenant chacun un élément d'apport de chaleur. Pour ce faire, chaque dispositif comprend une source laser prévue pour émettre un faisceau laser et un gonomiètre adapté pour réfléchir le faisceau laser vers la surface.

Cela permet de réaliser un contrôle non destructif d'une surface métallique d'une pièce.

Typiquement, ce procédé met en œuvre des faisceaux laser ayant une longueur d'onde sensiblement égale à 1064 nm, qui est couramment utilisée pour des applications nécessitant de fortes puissances de chauffe.

Cependant, un tel faisceau laser présente des risques pour un éventuel manipulateur. Plus particulièrement, le faisceau laser est susceptible de détériorer de manière irréversible un œil d'un manipulateur qui ne serait pas équipé de manière adapté. Ainsi, le port d'un équipement de protection est strictement demandé à tout manipulateur et un dispositif de protection est généralement mis en place pour la durée de l'inspection.

Cela complexifie la mise en œuvre du procédé d'inspection et peut représenter un frein à sa mise en œuvre, notamment dans un site d'exploitation, donc à une inspection régulière des pièces concernées.

Un but de l'invention est donc de proposer un procédé d'inspection d'une surface métallique d'une pièce dont la mise en œuvre est facilitée.

A cet effet, l'invention a pour objet un procédé d'inspection du type précité, comprenant les étapes suivantes :
- se procurer une première source laser agencée pour générer un premier faisceau laser ayant une première longueur d'onde comprise entre 1000 nm et 1100 nm et une puissance supérieure à 1 W;
- se procurer une seconde source laser agencée pour générer un second faisceau laser ayant une deuxième longueur d'onde comprise entre 1500 nm et 1800 nm et une puissance supérieure à 1 W ;

- se procurer une optique comprenant une entrée pour un faisceau laser, et un dispositif agencé pour projeter le faisceau laser sur la surface métallique et pour balayer la surface métallique avec le faisceau laser ;
- activer l'une des première et seconde sources laser et transmettre le premier ou le second faisceau laser jusqu'à l'entrée de l'optique ;
- balayer la surface métallique avec le premier ou le second faisceau laser projeté par l'optique ;
- acquérir au moins une image du rayonnement infrarouge émis par la surface métallique.

La présence de deux sources laser permet de choisir celle qui est la plus adaptée à l'utilisation souhaitée. Les longueurs d'onde comprises entre 1 500 nm et 1 800 nm ne pénètrent pas dans l'œil, ce qui permet donc de simplifier les éléments de protection mis en place pendant le procédé d'inspection.

Un procédé d'inspection selon l'invention peut comprendre l'une ou plusieurs des caractéristiques suivantes, prises seules ou suivant toutes les combinaisons techniquement possibles :
- lors du balayage, la surface métallique est chauffée par le faisceau laser projeté par l'optique ;
- l'optique comprend des éléments optiques, les éléments optiques ayant les mêmes propriétés d'absorption et de transmission à la première longueur d'onde et à la deuxième longueur d'onde ;
- le procédé comprend une étape de traitement d'une surface optique d'au moins un des éléments optiques, de sorte à ce que ledit élément optique a les mêmes propriétés d'absorption et de transmission à la première longueur d'onde et à la deuxième longueur d'onde ;
- le procédé est prévu pour l'inspection de pièces neuves sur un site de fabrication, la première source laser étant activée et le premier faisceau laser étant transmis jusqu'à l'entrée de l'optique,
- le procédé est prévu pour l'inspection de pièces déjà en exploitation, la seconde source laser étant activée et le second faisceau laser étant transmis jusqu'à l'entrée de l'optique ; et/ou
- l'image du rayonnement infrarouge est acquise par un même capteur pour la première source laser et la seconde source laser.

L'invention concerne en outre un dispositif d'inspection d'une surface métallique d'une pièce, le dispositif comprenant :
- une première source laser agencée pour générer un premier faisceau laser ayant une première longueur d'onde comprise entre 1000 et 1100 nm et une puissance supérieure à 1 W ;
- une seconde source laser agencée pour générer un second faisceau laser ayant une deuxième longueur d'onde comprise entre 1500 et 1800 nm et une puissance supérieure à 1 W;
- une optique comprenant une entrée pour un faisceau laser et un dispositif agencé pour projeter le faisceau laser sur la surface métallique et pour balayer la surface métallique avec le faisceau laser ;
- un capteur apte à acquérir au moins une image du rayonnement infrarouge émis par la surface métallique

le premier et le second faisceaux lasers étant aptes à être transmis l'un ou l'autre jusqu'à l'entrée de l'optique.

Un dispositif d'inspection selon l'invention peut comprendre l'une ou plusieurs des caractéristiques suivantes, prises seules ou suivant toutes les combinaisons techniquement possibles :
- l'optique comprend des éléments optiques, les éléments optiques ayant les mêmes propriétés d'absorption et de transmission à la première longueur d'onde et à la deuxième longueur d'onde ; et/ou
- au moins un des éléments optiques présente une surface optique traitée, de sorte à ce que ledit élément optique a les mêmes propriétés d'absorption et de transmission à la première longueur d'onde et à la deuxième longueur d'onde.

L'invention sera mieux comprise à la lecture de la description qui va suivre, donnée uniquement à titre d'exemple et faite en se référant aux figures annexées parmi lesquelles :
- la figure 1 est une représentation schématique d'un dispositif d'inspection selon un mode de réalisation de l'invention, et
- la figure 2 est une représentation schématique d'un procédé d'inspection selon un mode de réalisation de l'invention.

Le procédé décrit est un procédé d'examen de type photothermique actif. Le procédé est dit actif du fait que la pièce à caractériser est soumise à un chauffage. Le procédé est dit photothermique car il repose sur l'acquisition d'images infrarouges de la pièce chauffée.

Ce procédé est particulièrement adapté à la détection de défauts débouchants ou non débouchants dans des composants industriels. Il est particulièrement adapté aux pièces métalliques, notamment aux composants métalliques de centrale nucléaire.

Le procédé d'inspection est destiné à réaliser l'inspection mécanisée, automatisée ou robotisée de telles pièces, en fabrication ou en maintenance.

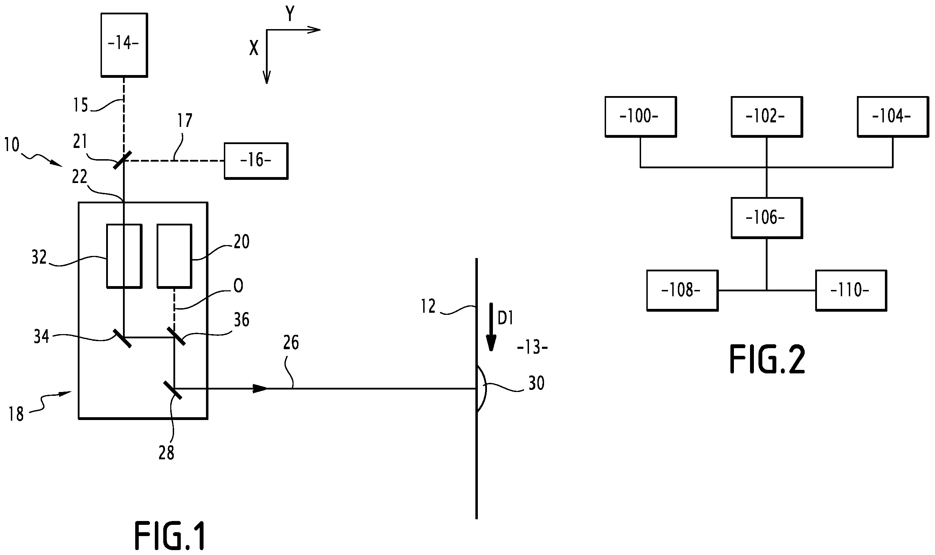

La figure 1 représente un dispositif d'inspection 10 selon un mode de réalisation de l'invention.

Le dispositif 10 est prévu pour l'inspection d'une surface métallique 12 d'une pièce 13.

Le dispositif 10 comprend une première source laser 14, une seconde source laser 16, une optique 18 et un capteur 20.

La première source laser 14 est agencée pour générer un premier faisceau laser 15 ayant une première longueur d'onde comprise entre 1000 et 1100 nm, plus particulièrement égale à 1064 nm, et une puissance supérieure à 1 W.

Avantageusement, la première source laser 14 est apte à contrôler et modifier la puissance du premier faisceau laser dans un intervalle donné.

La première source laser 14 présente un état activé, dans lequel la source génère le premier faisceau laser, et un état éteint, dans lequel la source ne génère pas de faisceau laser.

Le premier faisceau laser 15 est, par exemple, orienté selon une direction longitudinale X.

La seconde source laser 16 est agencée pour générer un second faisceau laser 17 ayant une deuxième longueur d'onde comprise entre 1500 et 1800 nm et une puissance suffisante pour créer une différence de température en cas de présence d'au moins un défaut. La puissance est en général supérieure à 1 W, et plus particulièrement supérieure à 10 W.

Le second faisceau laser a une géométrie particulière. Il est, par exemple, divergent.

Avantageusement, la seconde source laser 16 est apte à contrôler et modifier la puissance du second faisceau laser dans un intervalle donné.

La seconde source laser 16 présente un état activé, dans lequel la source génère le second faisceau laser, et un état éteint, dans lequel la source ne génère pas de faisceau laser.

Le second faisceau laser 17 est, par exemple, orienté selon une direction transversale Y, perpendiculaire à la direction longitudinale X.

Le premier faisceau laser 15 et le second faisceau laser 17 sont orientés de telle sorte que, s'ils étaient allumés en même temps, ils se croiseraient en un point de recoupement.

Au point de recoupement, un élément optique 21 est prévu pour diriger au moins partiellement le premier faisceau laser 15 et le second faisceau laser 17 vers l'optique.

L'élément optique 21 est, par exemple, un miroir semi-réfléchissant.

Le premier faisceau laser 15 traverse au moins partiellement le miroir semi-réfléchissant sans être dévié, l'optique 18 étant sensiblement aligné avec la première source laser 14 suivant la direction longitudinale X.

Le second faisceau laser 17 est au moins partiellement réfléchi par le miroir semi-réfléchissant selon un angle sensiblement égal à 45°.

Après le point de recoupement, les trajets optiques du premier faisceau laser 15 et du second faisceau laser 17 sont confondus, ici selon la direction longitudinale X.

L'optique 18 comprend une entrée 22 pour un faisceau laser 26 et un dispositif 24 agencé pour projeter le faisceau laser 26 sur la surface métallique 12 et pour balayer la surface métallique 12 avec le faisceau laser 26.

Le premier et le second faisceaux lasers 15, 17 sont aptes à être transmis l'un ou l'autre jusqu'à l'entrée 22 de l'optique 18, notamment grâce à l'élément optique 21 au point de recoupement.

L'optique 18 comprend des éléments optiques.

L'optique 18 comprend un dispositif de balayage 28 du faisceau laser comprenant au moins un des éléments optiques, par exemple, un miroir ou un goniomètre dont l'orientation par rapport à la surface 12 est variable. Ainsi, le dispositif de balayage 28 est apte à balayer le faisceau laser 26 sur la surface métallique.

Le faisceau laser transmis à l'entrée 22 de l'optique 18 présente un parcours optique dans l'optique 18 délimité par les éléments optiques.

Les éléments optiques ont les mêmes propriétés d'absorption et de transmission à la première longueur d'onde et à la deuxième longueur d'onde.

Au moins un des éléments optiques présente une surface optique traitée, de sorte à ce que ledit élément optique a les mêmes propriétés d'absorption et de transmission à la première longueur d'onde et à la deuxième longueur d'onde.

Le traitement de ladite surface optique consiste, par exemple, dans le dépôt d'une couche ou d'un substrat en borosilicate ou en verre borosilicate crown, par exemple, commercialisé sous l'appellation N-BK7 ou BK7 (marques déposées). Alternativement ou additionnellement, au moins un des éléments optiques a par nature les mêmes propriétés d'absorption et de transmission à la première longueur d'onde et à la deuxième longueur d'onde.

Ainsi, le premier faisceau laser et le second faisceau laser ont un parcours optique similaire dans l'optique 18.

Un exemple d'éléments optiques est représenté sur la figure 1, ainsi que le parcours optique associé.

L'optique 18 comprend, par exemple, dans l'ordre du parcours optique d'un faisceau laser, les éléments optiques suivants :
- une optique de génération d'une feuille laser 32,
- un miroir réfléchissant 34,
- une lame dichroïque 36, et
- le dispositif de balayage 28, ici un goniomètre.

L'optique de génération d'une feuille laser 32 sert notamment à générer un faisceau laser présentant une géométrie sous forme de ligne selon un plan de coupe perpendiculaire au faisceau à partir d'un faisceau laser présentant une géométrie sous forme de point selon un plan de coupe perpendiculaire au faisceau. Le faisceau forme alors en trois dimensions une feuille.

L'optique de génération d'une feuille laser comprend, par exemple, une lentille cylindrique.

Le miroir 34 réfléchit le faisceau.

La lame dichroïque 36 réfléchit tout faisceau présentant une longueur d'onde comprise entre 1 000 nm et 1 100 nm ou 1 500 nm et 1 800 nm.

La lame dichroïque transmet en outre les longueurs d'onde compris dans un spectre donné, correspondant par exemple au spectre de fonctionnement du capteur 20.

Le miroir 34 et la lame dichroïque 36 forment un angle sensiblement égal à 45° avec le chemin optique du faisceau laser. Ainsi, le miroir 34 et la lame dichroïque 36 réfléchissent le faisceau laser selon un angle droit.

Le dispositif de balayage 28 forme un angle compris entre 45° moins un angle de balayage et 45° plus l'angle de balayage. L'ouverture totale du dispositif de balayage est comprise entre -45° et +45°.

D'autres modes de réalisation dans la nature et l'agencement des éléments optiques sont possibles.

Le faisceau laser 26 est orienté par le dispositif de balayage 28 vers la surface 12 et crée un apport de chaleur 30 sur la surface 12.

Le capteur 20 est apte à acquérir au moins une image du rayonnement infrarouge émis par la surface métallique 12.

Le capteur 20 détecte les longueurs d'onde pour le spectre de fonctionnement compris entre 2 000 nm et 0,1 mm, plus particulièrement entre 3 µm et 5 µm ou entre 8 µm et 12 µm.

Le capteur 20 est, par exemple, une caméra infrarouge numérique présentant un axe optique O.

Une partie du rayonnement infrarouge émis par la surface métallique 12 est transmise à l'optique au niveau de la sortie, est réfléchie par le dispositif de balayage 28 et est transmise par la lame dichroïque 36. Le capteur 20 est, par exemple, placé tel que ladite partie du rayonnement est captée par le capteur 20 après la transmission par la lame dichroïque. Son axe optique O réalise un angle de 45° avec la lame dichroïque.

Le faisceau laser 26 en sortie de l'optique 18 est collimaté avec l'axe optique O du capteur 20, c'est-à-dire que le faisceau laser 26 est parallèle à l'axe optique O.

La lame dichroïque permet notamment de protéger le capteur d'un retour laser. En effet, il arrive que le faisceau laser soit partiellement réfléchi ou génère un faisceau secondaire en interaction avec la surface et forme un retour. Si ce retour atteint le capteur, il est susceptible de l'endommager. La lame dichroïque ne transmet pas les première et deuxième longueurs d'onde et ainsi évite qu'un potentiel retour de faisceau laser atteigne le capteur 20.

Le capteur 20 est apte à acquérir une pluralité d'images à une pluralité d'instants.

Dans un mode de réalisation, le capteur 20 est prévu pour acquérir des images, chacune de l'ensemble de la surface 12 à inspecter.

En variante, le capteur 20 est apte à acquérir une image d'une zone de la surface, le capteur 20 étant prévu pour balayer la zone sur l'ensemble de la surface à inspecter. La zone comprend ou est à proximité de l'apport de chaleur sur la surface 12 par le faisceau laser 26.

Un procédé d'inspection d'une surface métallique d'une pièce va maintenant être décrit en référence à la figure 2.

Le procédé est, par exemple, mis en œuvre par le dispositif d'inspection décrit précédemment.

Le procédé comprend les étapes suivantes :
- se procurer une première source laser 100 ;
- se procurer une seconde source laser 102 ;
- se procurer une optique 104 ;
- activer l'une des première et seconde sources laser et transmettre le premier ou le second faisceau laser jusqu'à l'entrée de l'optique 106 ;
- balayer 108 la surface métallique avec le premier ou le second faisceau laser projeté par l'optique ;
- acquérir 110 au moins une image du rayonnement infrarouge émis par la surface métallique.

L'optique, la première source laser et la seconde source laser sont similaires à ce qui a été décrit précédemment.

En outre, le procédé comprend éventuellement une étape de traitement d'une surface optique d'au moins un des éléments optiques de l'optique, de sorte à ce que ledit élément optique a les mêmes propriétés d'absorption et de transmission à la première longueur d'onde et à la deuxième longueur d'onde.

Une seule source laser entre la première source laser et la seconde source laser est activée, de sorte à transmettre un unique faisceau laser, parmi le premier faisceau laser et le second faisceau laser, tels que décrits précédemment, jusqu'à l'entrée 22 de l'optique 18.

Le faisceau laser transmis 26 présente ainsi en entrée 22 soit une longueur d'onde comprise entre 1 000 nm et 1 100 nm et une puissance supérieure à 1 W, soit une longueur d'onde comprise entre 1 500 nm et 1 800 nm et une puissance supérieure à 1 W, avantageusement supérieure à 10 W.

Le faisceau transmis à l'entrée 22 de l'optique 18 est particulièrement adapté à la mise en œuvre du procédé.

Dans un mode de réalisation, le procédé est prévu pour l'inspection de pièces neuves sur un site de fabrication. Dans ce cas, la première source laser est activée et le premier faisceau laser est transmis jusqu'à l'entrée de l'optique.

Le premier faisceau laser présente une longueur d'onde comprise entre 1 000 nm et 1 100 nm et une puissance supérieure à 1 W.

En variante, le procédé est prévu pour l'inspection de pièces déjà en exploitation. Alors, la seconde source laser est activée et le second faisceau laser est transmis jusqu'à l'entrée de l'optique.

La pièce est, par exemple, une roue Pelton ou un disque de turbine.

Le second faisceau laser présente une longueur d'onde comprise entre 1 500 nm et 1 800 nm et une puissance supérieure à 1 W, préférentiellement supérieure à 10 W.

Le procédé ne nécessite pas un dispositif d'inspection aussi important que lorsqu'un faisceau laser présentant une longueur d'onde comprise entre 1 000 nm et 1 100 nm. Ainsi, la mise en œuvre de l'inspection dans un site en exploitation est facilitée.

Le faisceau laser 26 est projeté et balayé par l'optique 18 sur la surface 12.

Le balayage est, par exemple, réalisé selon une pluralité de lignes sensiblement parallèles à une première direction D1.

Lors du balayage, le faisceau laser 26 projeté par l'optique 18 génère un apport de chaleur 30 sur la surface 12.

L'apport de chaleur 30 a toute sorte de forme.

L'apport de chaleur est, par exemple, un segment allongé suivant des directions perpendiculaires à la première direction D1, le segment allongé étant généré grâce à l'optique de génération de feuille laser 32. Le segment présente une longueur comprise entre 10 mm et 30 mm et une épaisseur comprise entre 1 mm et 3 mm sur la surface 12.

En variante, l'apport de chaleur 30 est un point se déplaçant à grande vitesse perpendiculairement de manière à la première direction D1 à constituer un segment. Cela est, par exemple, réalisé à l'aide du faisceau laser balayé d'une part à une première vitesse suivant une direction perpendiculaire à la première direction D1 et d'autre part à une seconde vitesse suivant la première direction D1 dans le cadre du balayage 108, l'optique 18 ne présentant alors pas d'optique de génération de feuille laser 32. La première vitesse est très supérieure à la seconde vitesse.

L'apport de chaleur 30 peut également avoir la forme d'un cercle, d'une ellipse, d'un rectangle ou toute autre forme adaptée.

Le balayage 108 est fait avec un recouvrement de l'apport de chaleur, de telle sorte que chaque point de la surface subit au cours du procédé un apport de chaleur dû au faisceau laser transmis 26.

Au moins une image du rayonnement infrarouge émis par la surface 12 est acquise par le capteur 20.

L'image du rayonnement infrarouge est acquise par le même capteur 20 que le faisceau laser transmis soit le premier faisceau laser ou le second faisceau laser.

Dans un mode de réalisation, le capteur 20 acquiert une image de l'ensemble du rayonnement infrarouge émis par la surface 12 à chaque acquisition. Une pluralité d'images du rayonnement infrarouge de la surface 12 est acquise au cours du balayage 108.

Alternativement, le capteur 20 acquiert une image du rayonnement infrarouge émis par une zone de la surface à chaque acquisition. La zone est balayée avec recouvrement sur l'ensemble de la surface à inspecter, simultanément au faisceau laser transmis 26. Le balayage de la zone est, par exemple, réalisé selon une pluralité de lignes sensiblement parallèles à la première direction D1.

La zone comprend ou est à proximité de l'apport de chaleur sur la surface 12 par le faisceau laser 26. Le capteur 20 acquiert une pluralité d'images du rayonnement infrarouge au cours de son balayage et du balayage 108 de la surface métallique par le faisceau laser.

Puis les images acquises sont traitées de sorte à détecter des éventuels défauts dans la pièce. Des méthodes permettant de traitées les images ainsi acquises sont connues de l'état de la technique, par exemple, du document FR 3020678.

La présence de deux sources laser ayant des caractéristiques différentes permet de choisir le faisceau laser le plus adapté pour l'utilisation prévue. Dans un site d'exploitation, par exemple, il peut être compliqué de mettre en place l'ensemble des mesures de sécurité habituellement mises en œuvre pour un laser ayant une longueur d'onde comprise entre 1 000 nm et 1 100 nm sans gêner excessivement l'exploitation. Ainsi, l'utilisation d'un faisceau laser ayant une longueur d'onde comprise entre 1 500 nm et 1 800 nm est plus appropriée, un tel faisceau laser limitant les risques et donc l'équipement nécessaire. La puissance supérieure à 1 W, préférentiellement supérieure à 10 W, permet en outre de pénétrer la surface 12.

## Revendications

1. Procédé d'inspection d'une surface métallique (12) d'une pièce (13), le procédé comprenant les étapes suivantes :
- se procurer une première source laser (14) agencée pour générer un premier faisceau laser ayant une première longueur d'onde comprise entre 1000 nm et 1100 nm et une puissance supérieure à 1 W;
- se procurer une seconde source laser (16) agencée pour générer un second faisceau laser ayant une deuxième longueur d'onde comprise entre 1500 nm et 1800 nm et une puissance supérieure à 1 W ;
- se procurer une optique (18) comprenant une entrée (22) pour un faisceau laser, et un dispositif agencé pour projeter le faisceau laser sur la surface métallique et pour balayer la surface métallique (12) avec le faisceau laser (26) ;
- activer l'une des première et seconde sources laser et transmettre le premier ou le second faisceau laser jusqu'à l'entrée de l'optique ;
- balayer la surface métallique (12) avec le premier ou le second faisceau laser projeté par l'optique ;
- acquérir au moins une image du rayonnement infrarouge émis par la surface métallique (12).

2. Procédé d'inspection selon la revendication 1, **caractérisé en ce que**, lors du balayage, la surface métallique (12) est chauffée par le faisceau laser (26) projeté par l'optique (18).

3. Procédé d'inspection selon la revendication 1 ou 2, **caractérisé en ce que** l'optique (18) comprend des éléments optiques, les éléments optiques ayant les mêmes propriétés d'absorption et de transmission à la première longueur d'onde et à la deuxième longueur d'onde.

4. Procédé d'inspection selon la revendication 3, comprenant une étape de traitement d'une surface optique d'au moins un des éléments optiques, de sorte à ce que ledit élément optique a les mêmes propriétés d'absorption et de transmission à la première longueur d'onde et à la deuxième longueur d'onde.

5. Procédé d'inspection selon l'une quelconque des revendications 1 à 4, prévu pour l'inspection de pièces neuves sur un site de fabrication, la première source laser (14) étant activée et le premier faisceau laser étant transmis jusqu'à l'entrée (22) de l'optique (18).

6. Procédé d'inspection selon l'une quelconque des revendications 1 à 4, prévu pour l'inspection de pièces déjà en exploitation, la seconde source laser (16) étant activée et le second faisceau laser étant transmis jusqu'à l'entrée (22) de l'optique (18).

7. Procédé d'inspection selon l'une quelconque des revendications 1 à 6, **caractérisé en ce que** l'image du rayonnement infrarouge est acquise par un même capteur (20) pour la première source laser et la seconde source laser.

8. Dispositif d'inspection d'une surface métallique d'une pièce, le dispositif comprenant :
- une première source laser (14) agencée pour générer un premier faisceau laser ayant une première longueur d'onde comprise entre 1000 et 1100 nm et une puissance supérieure à 1 W ;
- une seconde source laser (16) agencée pour générer un second faisceau laser ayant une deuxième longueur d'onde comprise entre 1500 et 1800 nm et une puissance supérieure à 1 W;
- une optique (18) comprenant une entrée (22) pour un faisceau laser et un dispositif agencé pour projeter le faisceau laser sur la surface métallique et pour balayer la surface métallique avec le faisceau laser ;
- un capteur apte à acquérir au moins une image du rayonnement infrarouge émis par la surface métallique
le premier et le second faisceaux lasers étant aptes à être transmis l'un ou l'autre jusqu'à l'entrée (22) de l'optique (18).

9. Dispositif d'inspection selon la revendication 8, **caractérisé en ce que** l'optique (18) comprend des éléments optiques, les éléments optiques ayant les mêmes propriétés d'absorption et de transmission à la première longueur d'onde et à la deuxième longueur d'onde.

10. Dispositif d'inspection selon la revendication 9, **caractérisé en ce qu'**au moins un des éléments optiques présente une surface optique traitée, de sorte à ce que ledit élément optique a les mêmes propriétés d'absorption et de transmission à la première longueur d'onde et à la deuxième longueur d'onde.

## Patentansprüche

1. Verfahren zum Überprüfen einer Metallfläche (12) eines Bauteils (13), wobei das Verfahren die folgenden Schritte umfasst:
- Beschaffen einer ersten Laserquelle (14), die ausgebildet ist, ein erstes Laserbündel zu erzeugen, das eine erste Wellenlänge zwischen 1000 nm und 1100 nm und eine Leistung größer als 1 W aufweist;
- Beschaffen einer zweiten Laserquelle (16), die ausgebildet ist, ein zweites Laserbündel zu erzeugen, das eine zweite Wellenlänge zwischen 1500 nm und 1800 nm und eine Leistung größer als 1 W aufweist;
- Beschaffen einer Optik (18), die einen Eingang (22) für ein Laserbündel und eine Vorrichtung, die ausgebildet ist, das Laserbündel auf die Metallfläche zu projizieren und die Metallfläche (12) mit dem Laserbündel (26) abzutasten;
- Aktivieren einer der ersten und zweiten Laserquelle und Senden des ersten oder zweiten Laserbündels auf den Eingang der Optik;
- Abtasten der Metallfläche (12) mit dem von der Optik projizierten ersten oder zweiten Laserbündel;
- Gewinnen mindestens eines Infrarotstrahlungsbildes, das von der Metallfläche (12) emittiert wird.

2. Überprüfungsverfahren nach Anspruch 1, **dadurch gekennzeichnet, dass** während der Abtastung die Metallfläche (12) von dem von der Optik (18) projizierten Laserbündel (26) aufgeheizt wird.

3. Überprüfungsverfahren nach Anspruch 1 oder 2, **dadurch gekennzeichnet, dass** die Optik (18) optische Elemente umfasst, wobei die optischen Elemente bei der ersten Wellenlänge und der zweiten Wellenlänge dieselben Absorptions- und Transmissionseigenschaften aufweisen.

4. Überprüfungsverfahren nach Anspruch 3, einen Schritt der Bearbeitung einer optischen Fläche mindestens eines der optischen Elemente umfassend derart, dass das optische Element bei der ersten Wellenlänge und der zweiten Wellenlänge dieselben Absorptions- und Transmissionseigenschaften aufweist.

5. Überprüfungsverfahren nach einem beliebigen der Ansprüche 1 bis 4, vorgesehen für die Überprüfung von neuen Bauteilen an der Herstellungsstätte, wobei die erste Laserquelle (14) aktiviert wird und das zweite Laserbündel zum Eingang (22) der Optik (18) gesendet wird.

6. Überprüfungsverfahren nach einem beliebigen der Ansprüche 1 bis 4, vorgesehen für die Überprüfung von schon im Betrieb befindlichen Bauteilen, wobei die zweiten Laserquelle (16) aktiviert wird und das zweite Laserbündel zum Eingang der Optik (18) gesendet wird.

7. Überprüfungsverfahren nach einem beliebigen der Ansprüche 1 bis 6, **dadurch gekennzeichnet, dass** das Infrarotstrahlungsbild für die erste Strahlungsquelle und die zweite Strahlungsquelle von demselben Sensor (20) gewonnen wird.

8. Vorrichtung zum Überprüfen einer Metallfläche eines Bauteils, wobei die Vorrichtung umfasst:
- eine erste Laserquelle (14), die ausgebildet ist, ein erstes Laserbündel zu erzeugen, das eine erste Wellenlänge zwischen 1000 nm und 1100 nm und eine Leistung größer als 1 W aufweist;
- eine zweite Laserquelle (16), die ausgebildet ist, ein zweites Laserbündel zu erzeugen, das eine zweite Wellenlänge zwischen 1500 nm und 1800 nm und eine Leistung größer als 1 W aufweist;
- eine Optik (18), die einen Eingang (22) für ein Laserbündel und eine Vorrichtung, die ausgebildet ist, das Laserbündel auf die Metallfläche zu projizieren und die Metallfläche (12) mit dem Laserbündel (26) abzutasten, umfasst;
- einen Sensor, der geeignet ist, mindestens ein Infrarotstrahlungsbild, das von der Metallfläche (12) emittiert wird, zu gewinnen wobei das erste und das zweite Laserbündel derart geeignet sind, das entweder das eine oder das andere auf den Eingang (22) der Optik (18) gesendet zu werden.

9. Überprüfungsvorrichtung nach Anspruch 8, **dadurch gekennzeichnet, dass** die Optik (18) optische Elemente umfasst, wobei die optischen Elemente bei der ersten Wellenlänge und der zweiten Wellenlänge dieselben Absorptions- und Transmissionseigenschaften aufweisen.

10. Überprüfungsvorrichtung nach Anspruch 9, **dadurch gekennzeichnet, dass** mindestens eines der optische Elemente eine behandelte optische Fläche derart aufweist, dass das optische Element bei der ersten Wellenlänge und der zweiten Wellenlänge dieselben Absorptions- und Transmissionseigenschaften aufweist.

## Claims

1. A method for inspecting a metal surface (12) of a part (13), the method comprising the following steps:
- procuring a first laser source (14) arranged to generate a first laser beam having a first wavelength comprised between 1000 nm and 1100 nm and a power greater than 1 W;
- procuring a second laser source (16) arranged to generate a second laser beam having a second wavelength comprised between 1500 nm and 1800 nm and a power greater than 1 W;
- procuring an optic (18) comprising an entrance (22) for a laser beam, and a device arranged to project the laser beam on the metal surface and to scan the metal surface (12) with the laser beam (26);
- activating one of the first and second laser sources and transmitting the first or second laser beam to the entrance of the optic;
- scanning the metal surface (12) with the first or second laser beam projected by the optic;
- acquiring at least one image of the infrared radiation emitted by the metal surface (12).

2. The inspection method according to claim 1, **characterized in that**, during scanning, the metal surface (12) is heated by the laser beam (26) projected by the optic (18).

3. The inspection method according to claim 1 or 2, **characterized in that** the optic (18) comprises optical elements, the optical elements having the same absorption and transmission properties at the first wavelength and the second wavelength.

4. The inspection method according to claim 3, comprising a step for treating an optical surface of at least one of the optical elements, such that said optical element has the same absorption and transmission properties at the first wavelength and the second wavelength.

5. The inspection method according to any one of claims 1 to 4, provided for the inspection of new parts on a manufacturing site, the first laser source (14) being activated and the first laser beam being transmitted to the entrance (22) of the optic (18).

6. The inspection method according to any one of claims 1 to 4, provided for the inspection of parts already in use, the second laser source (16) being activated and the second laser beam being transmitted to the entrance (22) of the optic (18).

7. The inspection method according to any one of claims 1 to 6, **characterized in that** the image of the infrared radiation is acquired by a same sensor (20) for the first laser source and the second laser source.

8. A device for inspecting a metal surface of a part, the device comprising:
- a first laser source (14) arranged to generate a first laser beam having a first wavelength comprised between 1000 and 1100 nm and a power greater than 1 W;
- a second laser source (16) arranged to generate a second laser beam having a second wavelength comprised between 1500 and 1800 nm and a power greater than 1 W;
- an optic (18) comprising an entrance (22) for a laser beam and a device arranged to project the laser beam on the metal surface and to scan the metal surface with the laser beam;
- a sensor capable of acquiring at least one image of the infrared radiation emitted by the metal surface,
the first and second laser beams being suitable, either one or the other, for transmission to the entrance (22) of the optic (18).

9. The inspection device according to claim 8, **characterized in that** the optic (18) comprises optical elements, the optical elements having the same absorption and transmission properties at the first wavelength and the second wavelength.

10. The inspection device according to claim 9, **characterized in that** at least one of the optical elements has a treated optical surface, such that said optical element has the same absorption and transmission properties at the first wavelength and the second wavelength.
